# EUROPÄISCHE PATENTSCHRIFT

(11) **EP 3 933 347 B1**
(45) Veröffentlichungstag und Bekanntmachung des Hinweises auf die Patenterteilung: **07.06.2023**
(21) Anmeldenummer: 21180114.7
(22) Anmeldetag: 17.06.2021
(51) Int. Cl.: G01D 5/245

(54) **VERFAHREN ZUR HERSTELLUNG EINER MASSVERKÖRPERUNG**
METHOD FOR PRODUCING A MATERIAL MEASURE
PROCÉDÉ DE FABRICATION D'UNE MESURE MATÉRIALISÉE

(30) Priorität: 02.07.2020 DE 102020003964
(43) Veröffentlichungstag der Anmeldung: 05.01.2022
(73) Patentinhaber: Baumer Germany GmbH & Co. KG, 78333 Stockach (DE)
(72) Erfinder: Pham, Michal, 13585 Berlin (DE); Hohl, Michael, 8405 Winterthur (CH)
(74) Vertreter: Strauss, Steffen

(56) Entgegenhaltungen:
- WO-A1-02/41330
- DE-A1- 10 210 326
- DE-A1-102008 020 455
- DE-A1-102008 037 006
- DE-A1-102011 015 886
- DE-B3-102017 110 259

## Beschreibung

Die Erfindung betrifft ein Verfahren zur Herstellung einer Maßverkörperung, insbesondere eines Polrads oder einer linearen Maßverkörperung, welche beispielsweise bei Drehgebern oder sonstigen Vorrichtungen zur Bestimmung einer Position eines sich drehenden oder linear bewegenden Gegenstandes eingesetzt werden kann.

Aus dem Stand der Technik sind für den Bau von Drehgebern sogenannte Polräder bekannt, die als Maßverkörperung dienen und so an den Gegenstand, dessen Drehzahl bzw. Rotationsposition zu bestimmen ist, gekoppelt sind, dass sie sich mit dem Gegenstand mitdrehen und ihre Rotation wiederum anstelle der des eigentlichen Gegenstands vermessen werden kann.

Aus der DE 10 2015 121 812 B4 ist zum Beispiel ein Herstellungsverfahren für ein solches Polrad bekannt, dass über eine auslesbare Skala verfügt. Diese Skala, welche sich aus Skalenstrichen zusammensetzt, wird auf einem Substrat aufgebracht, indem dort, wo sich ein Skalenstrich befinden soll, ein magnetisierbares Druckmittel entsprechend aufgetragen wird. Das fertig mit dem Substrat montierte Polrad wird in einem letzten Verfahrensschritt magnetisiert, sodass das entsprechende Nutzfeld während der Drehung detektierbar ist.

Aus einem Katalog mit Produktinformation der Firma Sensitec ist ein Elastomerband bekannt, das auf einem Träger geklebt ist. Ein Linearmaßstab ist ebenfalls aus dieser Veröffentlichung bekannt, der auf einem Edelstahlträger aufgebracht ist.

Die Druckschrift US 2005 / 025 4986 A1 offenbart ein magnetisches Polrad, welches hergestellt wird, indem ein Magnet auf einem Metallträger gesintert wird und im Anschluss magnetisiert wird.

Aus der DE 3 719 306 A1 ist ein Magnet für NMR-Tomographen bekannt, bei welcher ein permanentmagnetisches Material in Form eines flexiblen Bandes abschnittsweise magnetisiert und anschließend in magnetisiertem Zustand um einen Träger gewickelt wird.

Die Druckschrift GB2494110A1 offenbart einen Polradaufbau in Form eines elastomerischen Films, welcher auf einen externen Ring angebracht wird.

Aus der DE 10 2017 110 259 B3 ist eine Magnetbaugruppe, bestehend aus einer Trägerhülse und einem Magnetring bekannt, der dadurch gebildet ist, dass ein elastisches Band auf die Trägerhülse aufgewickelt ist.

Aus der US 5 796 200 A ist ein bürstenloser Motor mit einer Magneteinheit bekannt, die zu einer bestimmten Länge geschnitten wird und einem Rotorgehäuse befestigt wird.

Die WO 2020 / 147 969 offenbart einen Trägerring und ein darauf umfangsseitig angeordnetes magnetisches Maßband, wobei der Trägerring aus Metall, vorzugsweise Eisen besteht.

Aus der DE 10 2008 037 006 A1 ist ein Verfahren zum Herstellen einer hohlzylindrischen Drehwertverkörperung bekannt. In diesem Verfahren wird ein Magnetkörper verwendet, der zu wenigstens einer Windung gewickelt wird. Die Drehwertverkörperung wird wenigstens aus zwei Windungen aufgebaut.

Die DE 102 10 326 A1 offenbart einen Magnetisierungskopf. Der Magnetisierungskopf ist C-förmig und weist einen Luftspalt auf. Ein magnetischer Fluss durch den Luftspalt wird verwendet, um einen Maßstab zu magnetisieren. Der magnetische Fluss kann definiert ein- und ausgeschaltet werden.

Aus der WO 02/41330 A1 ist ein Verfahren zur Herstellung eines magnetisierten und rohrförmigen Körpers bekannt. Der rohrförmige Körper kann mit oder ohne Wickelkern ausgebildet sein. Eine magnetisierbare und/oder vormagnetisierte Folie wird mehrlagig zu einem Wickelverbund aufgewickelt.

Die DE 10 2008 020 455 A1 offenbart einen magnetischen Encoder. Der magnetische Encoder umfasst einen Tragkörper bei welchem auf zumindest einer Seite eine magnetisierbare Spur angeordnet ist, wobei die magnetisierbare Spur mit einem magnetischen Polmuster versehen ist. Die magnetisierbare Spur weist an unterschiedlichen Stellen unterschiedliche Schichtdicken auf.

Aufgabe der Erfindung ist es, eine Maßverkörperung bzw. ein Verfahren zur Herstellung einer solchen Maßverkörperung vorzuschlagen, bei der bzw. bei dem eine möglichst gute Abtastungsperformance gewährleistet werden kann, während die Kosten wiederum reduziert werden können.

Die Aufgabe wird, ausgehend von einer Maßverkörperung bzw. einem Herstellungsverfahren einer solchen Maßverkörperung der eingangs genannten Art, durch die Merkmale des Anspruchs 1 bzw. 7 gelöst.

Durch die in den abhängigen Ansprüchen genannten Maßnahmen sind vorteilhaft Ausführungen und Weiterbildungen der Erfindung möglich.

Mit dem erfindungsgemäßen Herstellungsverfahren kann eine Maßverkörperung, insbesondere in Form eines Polrades oder einer linearen Maßverkörperung hergestellt werden. Die Maßverkörperung wird mechanisch mit dem sich bewegenden und zu vermessenen Gegenstand verbunden bzw. an diesem gekoppelt. Zum Beispiel wird ein Polrad auf eine sich drehende Achse/Welle montiert. Dieses Polrad ist sodann zum Beispiel mit Markierungen, insbesondere mit magnetischen Markierungen versehen, welche detektiert werden können und so Auskunft über die aktuelle Position und/oder die Geschwindigkeit bei einer linearen Bewegung und/oder die Winkelgeschwindigkeit und/oder Frequenz und/oder die Winkelposition bei einer Drehbewegung des Gegenstandes geben können. In analoger Weise kann also eine solche Maßverkörperung auch für Positions- oder Geschwindigkeitsbestimmungen bei einer Rotations- und bei einer Linearbewegung eines Gegenstandes eingesetzt werden.

Zur Herstellung der Maßverkörperung wird zunächst erfindungsgemäß ein Elastomerband bereitgestellt. Damit darauf eine Magnetisierung bzw. die Erzeugung von Markierungsbereichen, welche eine lokal begrenzte, vordefinierte Magnetisierung aufweisen, möglich wird, umfasst das Elastomerband ein Elastomer, welches mit magnetisierbaren Partikel versehen ist. Bei einem Elastomer handelt es sich um einen Kunststoff, der zumindest teilweise elastische Eigenschaften aufweist, sich also bei einer Krafteinwirkung verformen kann und bei nachlassender Kraft sodann auch wieder in seinen ursprünglichen Formzustand zurückwechseln kann.

Auf diesem bereitgestellten Elastomerband wird eine Skala aus wenigstens zwei magnetisierten Markierungsbereichen erzeugt, die später beim Einsatz in einem Drehgeber bzw. einer Positionsbestimmungsvorrichtung ausgelesen werden kann. An einzelnen Stellen des Elastomerbandes erfolgt eine Magnetisierung, die lokal auf die zu erzeugenden Magnetisierungsbereiche begrenzt ist. Da das für das Elastomerband verwendete Elastomer mit magnetisierbaren Partikel versehen ist, kann das Band grundsätzlich an jeder Stelle magnetisiert werden. Diese Magnetisierungsbereiche wiederum können unterschiedlich ausgebildet sein. In einem einfachen Fall kann es sich zum Beispiel um Skalenstriche handeln. Denkbar sind aber auch sonstige Arten der Codierung. Die Magnetisierungsbereiche können zum Beispiel in vorbestimmten Winkelabständen oder geringen Abständen entlang der Länge des Elastomerbandes angeordnet sein.

Es ist auch denkbar, dass die Magnetisierungsbereiche in zwei oder mehr Spuren entlang des Elastomerbands angeordnet sind. Die Auswahl der Magnetisierungsbereiche, deren Form und jeweilige Positionen hängt unter anderem auch davon ab, welche Art von Drehgeber oder Positionsbestimmungsvorrichtung eingesetzt werden soll und welche Informationen daraus gewonnen werden, z.B. ob die Frequenz gemessen werden soll oder eine sehr präzise Bestimmung der Winkelposition zu erfolgen hat.

In besonders vorteilhafter Weise wird erfindungsgemäß ein Träger bereitgestellt, der wiederum bei der Maßverkörperung das Elastomerband trägt. In einem erfindungsgemäßen Verfahrensschritt wird das Elastomerband auf diesen Träger aufgebracht bzw. montiert. Grundsätzlich sind hiermit mehrere Vorteile verbunden:
Erfindungsgemäß wird für den Träger ein Material mit geringer magnetischer Permeabilität ausgewählt. Im Zusammenhang mit der Entwicklung der Erfindung hat sich herausgestellt, dass Träger aus einem Material mit geringerer magnetischer Permeabilität eine geringere Fremdfeldbeeinflussung mit sich bringen. So kann ein störender Einfluss des magnetischen Fremdfeldes im Trägermaterial reduziert werden.

Darüber hinaus hat die Erfindung wiederum die Problematik erkannt, dass bei der Fertigung, und insbesondere bei der Magnetisierung / Skalenerzeugung ein Träger, oder allgemeiner eine Unterlage unter dem Elastomerband aus einem Material geringer magnetischer Permeabilität sich negativ auf das Magnetisierungsvermögen des Elastomerbandes auswirkt. Dadurch, dass ein solches Material wiederum die Feldlinien nur schlecht leitet, verschlechtert sich in der Regel die Magnetisierung des Elastomerbandes bzw. der Markierungsbereiche, die bei der Magnetisierung erreicht werden kann. Das Elastomerband lässt sich deutlich weniger stark magnetisieren, wenn das Elastomerband bei der Magnetisierung bereits auf einem Träger mit geringerer magnetischer Permeabilität montiert war. Hierdurch würde sich die Abtastungsperformance verschlechtern.

Darüber hinaus wurde bei der Entwicklung der Erfindung erkannt, dass das Aufbringen des Elastomerbandes auf einen Träger nach der Erzeugung einer auslesbaren Skala den Vorteil mit sich bringt, dass die Auswahl des Trägers, der später ein Teil der Maßverkörperung bildet, auch wesentlich flexibler gehandhabt werden kann. Beispielsweise können hierzu Träger verwendet werden, die eigens auf die entsprechende Welle oder Achse zugeschnitten sind oder die auf einen Grund- oder Hilfsträger montiert werden können, der sich bereits an der zu vermessenen Achse bzw. Welle befindet.

Die Erfindung ist somit in mehrfacher Hinsicht mit deutlichen Kostenvorteilen, sowohl bei der Herstellung der Maßverkörperung als auch bei der Montage der Maßverkörperung verbunden. In Bezug auf die Herstellung können deutliche Kostenvorteile erreicht werden, weil das Elastomerband erfindungsgemäß vor der Erzeugung einer auslesbaren Skala zur Aufbringung auf einen Träger transferiert werden muss und somit die Fertigung genau auf die Anforderungen des entsprechenden Drehgebers bzw. der entsprechende Positionsbestimmungsvorrichtung eingestellt werden kann.

Um eine gute Abtastungsperformance und eine hohe Flussdichte zu erreichen, kann das Elastomerband für sich genommen separat magnetisiert werden, bzw. es kann separat die auslesbare Skala erzeugt werden, bevor es schließlich transferiert und auf den späteren Träger der Maßverkörperung aufgebracht wird.

Eine weitere Kosteneinsparung kann dadurch erreicht werden, dass das gleiche Elastomerband grundsätzlich auf verschiedene Träger appliziert werden kann, und auch die Träger selbst wiederum so ausgebildet sein können, dass sie auf bestehende Hilfsträger oder Grundträger montiert sind, die zum Beispiel bereits an der Welle oder der Achse vormontiert sind. Es ist somit nicht notwendig, für jede spezielle Messsituation individuelle Maßverkörperungen zu fertigen, sondern die Montage kann auf bereits vormontierten Hilfsträgern oder Grundträgern erfolgen. Somit muss in bestimmten Fällen lediglich ein Teil der Maßverkörperung ausgetauscht oder montiert werden. Der Träger kann gewissermaßen auch als Adapter dienen und auf verschiedene Grundträger oder bereits vormontierte Hilfsträger passen.

Als Elastomer kann für das Band zum Beispiel NBR und/oder HNBR gewählt werden, welche in Bezug auf die Langlebigkeit und Beständigkeit der Maßverkörperung auch vorteilhaft sind. Im Übrigen ist es auch möglich, einen geteilten Träger zu verwenden, der einfacher auf eine Achse bzw. Welle angebracht werden kann, indem er bei der Montage zusammengebaut wird. Dies wird in Zusammenhang mit einem weiteren Ausführungsbeispiel erläutert. Gemäß der Erfindung können Elastomerbänder mit Remanenzen im Bereich von 200 mT und mehr stärker magnetisiert werden. Diese Magnetisierungswerte ermöglichen eine besonders gute Abtastung.

Dementsprechend können die genannten Vorteile bei einer erfindungsgemäßen Maßverkörperung in Bezug auf eine verbesserte Abtastungsperformance, einen flexibleren Einsatz, sowohl bei der Fertigung als auch der Montage, reduzierte Kosten und eine gute Detektierbarkeit genutzt werden. Gleiches gilt für eine reduzierte Fremdfeldbeeinflussung des Nutzfeldes bei einer erfindungsgemäßen Maßverkörperung, welche durch das erfindungsgemäße Verfahren zur Herstellung bzw. ein Ausführungsbeispiel der Erfindung erhältlich ist.

Erfindungsgemäß umfasst die Maßverkörperung somit einen Träger, welcher ein Material mit geringer magnetischer Permeabilität aufweist. Dabei kann es sich beispielsweise um ein paramagnetisches Material wie Aluminium handeln. Geeignet ist grundsätzlich auch Titan. Beide Werkstoffe zeichnen sich auch dadurch aus, dass sie besonders inerte Eigenschaften aufweisen, weil sie an der Luft eine Oxidschicht an der Oberfläche, die als Passivierungsschicht wirkt, ausbilden. Grundsätzlich kann als Träger aber auch zum Beispiel ein Kunststoff-Spritzgussteil verwendet werden.

Ferner umfasst die Maßverkörperung ein Elastomerband aus einem mit magnetisierbaren Partikeln versehenen Elastomer, welches um den Träger herum bzw. auf dem Träger angebracht ist. Das Elastomerband wiederum weist wenigstens zwei Markierungsbereiche auf, welche eine auslesbare Skala bilden. Im Bereich dieser Markierungsbereiche sind die Partikel in der gewünschten Weise magnetisiert. Bei der erfindungsgemäßen Maßverkörperung ist diese Magnetisierung der Markierungsbereiche so ausgebildet, dass jeweils im Abstand von 1 mm von der Oberfläche des Elastomerbandes eine magnetische Flussdichte von mindestens 30 mT bei einer Dicke von 1 mm bis 5 mm des Elastomerbandes erreicht wird.

Als Partikel werden Hartferritpartikel, insbesondere aus Strontiumferrit verwendet. In vorteilhafter Weise wird somit eine hohe Flussdichte erreicht, die zu einem zuverlässigen Auslesen der Skala und einer insgesamt hohen Abtastungsperformance führen kann.

Erfindungsgemäß ist das Elastomerband vor der Magnetisierung auf eine Unterlage aufgebracht, welche wenigstens teilweise aus einem Material mit hoher magnetischer Permeabilität besteht, besonders bevorzugt einem ferromagnetischen Material. Ein derartiges Material unterstützt die Erzeugung der auslesbaren Skala aus magnetisierten Markierungsbereichen. In der Regel wird bei der Erzeugung der auslesbaren Skala, die durch Magnetisierung einzelner Markierungsbereiche vorgenommen wird, ein Magnetisierungskopf eingesetzt, wobei das Elastomerband relativ zu diesem Schreibkopf bewegt wird. Ist die Unterlage wiederum aus einem Material hoher magnetischer Permeabilität ausgebildet, können die Feldlinien besser geleitet werden, was dazu führt, dass die Markierungsbereiche stärker magnetisiert und besser auslesbar sind. Diese Unterlage wiederum kann als Halterungsvorrichtung zur Handhabung des ansonsten eher biegeschlaffen Elastomerband während des Fertigungsprozesses dienen.

Das Elastomerband wiederum umgibt die Halterungsvorrichtung, sodass es in Bereichen mit hoher magnetischer Permeabilität an der Halterungsvorrichtung anliegt. In der Regel ist davon auszugehen, dass als Elastomerband zunächst eine Schlaufe eingesetzt wird und zwar grundsätzlich auch dann, wenn später anstelle eines Polrades zum Beispiel eine lineare Maßverkörperung hergestellt werden soll. Dadurch, dass eine Unterlage verwendet wird, die nicht identisch mit dem später bei der Maßverkörperung eingesetzten Träger des Elastomerbandes ist, wird also eine Austauschbarkeit des Trägermaterials ermöglicht, die in diesem Fall nicht nur zu einer besseren Abtastungsperformance führen kann, sondern auch zu einer höheren Flexibilität zwischen möglichst einheitlicher Fertigung und möglichst unterschiedlichen Einsatzbereichen.

Wie bereits dargestellt kann bei einer Ausführungsform der Erfindung das Elastomerband vor der Magnetisierung in Form einer Elastomerbandschlaufe, insbesondere in Form einer ringförmigen, nicht unterbrochenen Schlaufe bereitgestellt werden. Durch diese Maßnahme kann der Magnetisierungsprozess vereinfacht werden. Die Elastomerbandschlaufe kann auf der Halterungsvorrichtung montiert werden. Bei feststehendem Schreibkopf muss somit das Elastomerband bewegt werden, um die auslesbare Skala entlang des Bandes zu erzeugen. Somit wird eine einfache, schnelle und platzsparende Fertigung ermöglicht.

Ein besonders hohes Maß an Flexibilität kann wiederum dadurch erzeugt werden, dass das Elastomerband nach der Magnetisierung bzw. nach der Montage auf der Unterlage/Halterungsvorrichtung und somit vor dem Aufbringen auf den Träger quer zu seiner Längsrichtung durchgeschnitten wird. Aus der Schlaufe wird somit ein (lineares) Band erzeugt, das eine vereinfachte Montage erlaubt, auch dann, wenn keine lineare Maßverkörperung, sondern ein Polrad hergestellt werden soll. Wenn das Elastomerband auf einen Träger auf einer Achse/Welle montiert werden soll, an deren Enden bereits Räder montiert sind, ist es somit nicht notwendig, eines der Räder zu demontieren, um das Elastomerband bzw. die Maßverkörperung aufschieben zu können. Darüber hinaus ist ein Ablängen des Elastomerbandes auf eine passende Größe durch das Zurechtschneiden möglich. Es kann entsprechend verhindert werden, dass das Band nach der Montage auf dem Träger unter einer mechanischen Spannung steht. Dies erhöht nicht nur die Langlebigkeit des Elastomers, sondern bewirkt auch, dass die Magnetisierung der Markierungsbereiche in geringerem Maß durch mechanische Spannung beeinflusst wird.

Grundsätzlich kann der Schnitt durch das Elastomerband in einem Winkel von 90° zu dessen Längsachse verlaufen. Denkbar ist aber auch, dass der Schnitt unter einem anderen Winkel, besonders bevorzugt einem 45°-Winkel angesetzt wird. Ein Teil des Schnittes kann somit in seinem Verlauf auch eine Komponente entlang der Längsrichtung aufweisen. Wird ein Winkel abweichend von 90° zur Längserstreckung gewählt, so kann dies messtechnisch mit Vorteilen verbunden sein.

Grundsätzlich kann zum Beispiel der Schnitt genau zwischen zwei Markierungsbereichen verlaufen, was bei der Fertigung aber gezielt vorgenommen werden muss und aufwendig sein kann.

Der Schnitt kann aber auch mehrere Markierungsbereiche erfassen. Hierdurch kann bei der Detektion die Fehleranfälligkeit verringert werden, da die Auswirkungen beim Erfassen wenigstens zweier Markierungsbereiche in der Regel geringer ausfällt, als wenn nur ein Markierungsbereich quer durchgeschnitten wird. Dabei ist auch zu beachten, dass zum Beispiel bei der Montage eines Elastomerbandes auf einem runden Träger zur Fertigung eines Polrads im Bereich des Schnittes dennoch damit zu rechnen ist, dass eine Schnittkante und gegebenenfalls ein kleiner Spalt zwischen den Enden des Bandes bestehen bleibt. Ein solcher Spalt und auch eine Bruchkante innerhalb eines einzelnen Markierungsbereichs sind bei der Abtastung in aller Regel als Singularität in einer Messreihe sichtbar.

Ist also ein schräger Schnitt in Bezug auf die Längsrichtung vorhanden, so fällt dieses Gap zwischen den Enden des durchschnittenen Bandes nicht so stark bei der Messung ins Gewicht, weil die Detektionsvorrichtung über eine gewisse Breite des Bandes abtastet und somit über eine gewisse Länge immer ein Stück dieses Gaps miterfasst. Der Spalt bzw. der Schnitt wird daher aus messtechnischer Sicht meist weniger wahrgenommen als ein senkrecht zur Längsachse verlaufender Schnitt.

Neben einer geringeren Fehleranfälligkeit kann das Elastomerband im Zusammenhang mit der Maßverkörperung aber auch somit eine höhere Stabilität aufweisen.

Grundsätzlich können verschiedene Methoden eingesetzt werden, um das Elastomerband auf den Träger aufzubringen. Beispielsweise kann das Elastomerband auf den Träger geklebt werden, was im Allgemeinen eine kostengünstige Variante darstellt, die praktisch auch überall vor Ort durchgeführt werden kann, ohne dafür größere Geräte einsetzen zu müssen und ohne die Magnetisierung zu beeinflussen. Auch der Einsatz eines Ultraschallschweißverfahrens oder Laserschweißverfahrens ist durchaus möglich. Grundsätzlich kann auch eine Vulkanisierung eingesetzt werden. Alle diese Verfahren ermöglichen grundsätzlich ein hohes Maß an Haftkraft und Stabilität sowie eine Langlebigkeit in Bezug auf unterschiedlichste Einsätze.

Wie oben bereits dargestellt, kann sich grundsätzlich bei der Montage, insbesondere beim Austausch einer Maßverkörperung das Problem ergeben, dass die Maßverkörperung auf einer Achse zwischen zwei Rädern montiert werden soll. Ist ein entsprechendes Polrad als Maßverkörperung zwischen den Rädern anzubringen, so besteht grundsätzlich die Möglichkeit, eines der beiden Räder zu demontieren und dann das Polrad auf die Achse aufzuschieben. Dies ist im Allgemeinen jedoch mit einem sehr hohen Aufwand verbunden, insbesondere dann, wenn es sich zum Beispiel um die Achse eines schweren Schienenfahrzeugs handelt. Dementsprechend kann eine vorteilhafte Weiterbildung der Erfindung diese Problematik dadurch lösen, dass der Träger sich aus zumindest zwei Segmenten zusammensetzt, die voneinander getrennt werden können (z.B. Halb- oder Mehrschalenprinzip). Um im Wechsel eine Montage und Demontage zu ermöglichen, können derartige Segmente lösbar miteinander verbunden, z.B. verschraubt werden.

Der Träger kann eine Wellenaufnahme zur Befestigung des Trägers auf der Welle aufweisen, zum Beispiel weist der Träger dazu in seinem Zentrum eine Bohrung auf, sodass er grundsätzlich auf die Welle aufgeschoben werden kann. Bei einem aus mehreren Segmenten bestehenden Träger können diese Einzelsegmente auf der Welle zusammengesetzt und dann miteinander verbunden werden. Entsprechend kann die Trennstelle zwischen den Segmenten durch diese Wellenaufnahme verlaufen, damit der Träger ohne Aufschieben aufgebracht werden kann.

Eine weitere Option besteht darin, dass der Träger nur aus einem Segment besteht, dieses jedoch an einer Stelle unterbrochen ist (offener Träger) und somit auf die Welle über die Öffnung gebracht werden kann. Um das Segment beim Befestigen des Trägers an der Welle schließen zu können, kann das Segment bzw. der Träger biegsam oder elastisch ausgebildet sein (Bandschlaufenprinzip). Denkbar ist auch, dass der Träger zwei oder mehr Segmente aufweist, die über eine Gelenkverbindung bzw. ein Scharnier untereinander verbunden sind.

Grundsätzlich ist es denkbar, dass der Träger direkt auf der Achse bzw. Welle montiert wird. Alternativ dazu kann aber auch an den zu vermessenen Gegenstand, insbesondere der Achse oder der Welle bereits ein Grundträger oder Hilfsträger montiert sein. Der Träger kann dann auf den Grundträger oder Hilfsträger montiert werden. Dies ermöglicht auch, dass der jeweilige, zu fertigende Träger nicht so stark an den zu vermessenden Gegenstand angepasst sein muss. Beispielsweise besitzen die Achsen / Wellen, deren Rotation vermessen werden soll, im Allgemeinen verschiedene Durchmesser. Zur Vereinfachung können Grund-/Hilfsträger mit gleichem Außendurchmesser verwendet werden, sodass auch bei verschiedenen Dicken der Achse bzw. Welle einheitliche Träger mit gleichem Innendurchmesser der Wellenaufnahme verwendet werden können.

In vorteilhafter Weise ist nicht nur der Träger in mehrere Segmente aufgeteilt, auch das Elastomerband kann durchgeschnitten und kann somit in einfacher Weise aufgebracht werden, ohne dass es aufgeschoben werden muss und zum Beispiel eine Demontage eines Rades notwendig wäre. Beim Verkleben kann eine Montage auch unmittelbar ohne größere Geräte vor Ort erfolgen.

### AUSFÜHRUNGSBEISPIELE

Ausführungsbeispiele der Erfindung sind in den Zeichnungen dargestellt und werden nachstehend unter Angabe weiterer Einzelheiten und Vorteile näher erläutert. Im Einzelnen zeigen:
- Fig. 1 bis 3:: eine schematische Darstellung wesentlicher Schritte eines Herstellungsverfahrens für eine Maßverkörperung gemäß der Erfindung,
- Fig. 4:: einen Träger für eine Maßverkörperung in Form eines offenen Magnetrotors nach dem Bandschlaufenprinzip gemäß der Erfindung,
- Fig. 5:: einen Träger für eine Maßverkörperung in Form eines offenen Magnetrotors nach dem Halbschalenprinzip gemäß der Erfindung, sowie
- Fig. 6:: einen auf einer Achse montierten Magnetrotor (Maßverkörperung) gemäß Erfindung.

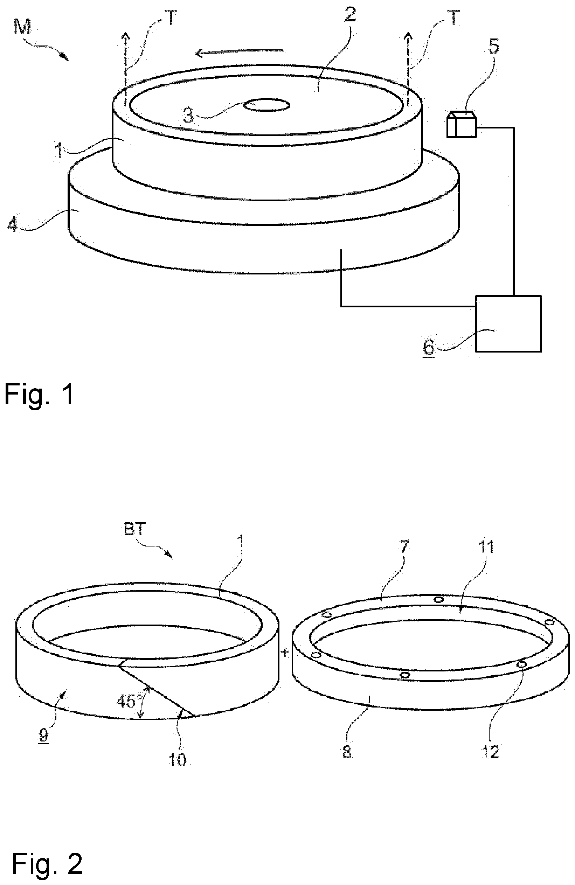

Die Figuren 1 bis 3 zeigen wesentliche Schritte eines Verfahrens zur Herstellung einer Maßverkörperung gemäß der Erfindung.

Für den Verfahrensschritt (M), nämlich das Erzeugen einer auslesbaren Skala durch Magnetisierung einzelner Markierungsbereiche, wird ein Elastomerband 1 zunächst zur Verfügung gestellt, das in Form einer Schlaufe vorliegt. Dieses besteht aus einem Elastomer, in welches magnetisierbare Partikel mit annähernd homogener Verteilung innerhalb des Elastomers eingebracht sind. Das Elastomerband 1 ist, wie in Figur 1 dargestellt, auf eine Halterungsvorrichtung 2 in Form einer Unterlage aus einem Stahlträger mit hoher magnetischer Permeabilität aufgebracht. Diese Halterungsvorrichtung 2 ist im vorliegenden Fall als Scheibe ausgebildet, die auf einer Achse 3 montiert ist, welche mittels eines Motors 4 gedreht wird. Auf diese Weise bewegt sich das an der Halterungsvorrichtung 2 montierte Elastomerband 1 relativ zu einem Magnetisierungsschreibkopf 5, der über eine Elektronikeinheit 6 gezielt bestromt wird, sodass er, während das Elastomerband 1 an dem Schreibkopf 5 vorbeifährt, gezielt ein Feld erzeugt und somit durch Magnetisierung der Partikel die Markierungsbereiche auf bzw. in dem Elastomerband 1 erzeugt, die schließlich eine auslesbare Skala bilden. Die Elektronikeinheit 6 steuert hierzu auch den Motor 4.

Gemäß der Erfindung wird das Elastomerband 1 anschließend transferiert (T). Ein Transfer bedeutet im Sinne der Erfindung, dass das Elastomerband 1 noch nicht auf dem für die Maßverkörperung vorgesehenen Träger aufgebracht ist, bis die auslesbaren Skala erzeugt ist, sondern dies erst später vorgenommen wird. Während der Erzeugung der auslesbaren Skala ist das Elastomerband 1 auf der Halterungsvorrichtung 2 montiert.

Dadurch, dass die Halterungsvorrichtung 2 aus einem Material hoher magnetischer Permeabilität, hier einem Ferromagneten besteht, kann das Elastomerband 1 sehr gut magnetisiert werden, da die vom Schreibkopf 5 erzeugten Felder auch gut über die Halterungsvorrichtung 2 geleitet werden.

Figur 2 zeigt das Bereitstellen (BT) eines Trägers 7, wobei der Träger 7 aus einem Material geringer magnetischer Permeabilität besteht, zum Beispiel aus paramagnetischem Aluminium. Der Träger 7 besteht im vorliegenden Fall aus einem Ring, auf dessen Mantelfläche 8 das Elastomerband 1 aufgeklebt wird. Wie in Figur 2 dargestellt, ist das Elastomerband 1 nun mit einer auslesbaren Skala aus Markierungsbereichen 9 versehen. Die Elastomerbandschlaufe 1 wird mit einem Schnitt 10 versehen, der quer durch das Band verläuft und dieses öffnet. Ebenfalls ist in Figur 2 zu sehen, dass dieser Schnitt 10, der in einem Winkel von 45° zur Längserstreckung verläuft, mehrere Markierungsbereiche durchschneidet, sodass insgesamt die Auswirkungen des Schnitts nicht so stark bei der Messung spürbar sind und die Fehleranfälligkeit geringer ausfallen kann. Eine Detektionsvorrichtung wird den Schnitt 10 nicht als Singularität im Messverlauf wahrnehmen, sondern die Beeinflussung verteilt sich vielmehr auf einen größeren Abtastbereich. Der Träger 7 wiederum besitzt im Inneren eine Aussparung in Form einer Wellenaufnahme 11. Die Wellenaufnahme 11 muss jedoch nicht unbedingt direkt auf der zu vermessenen Achse aufliegen, sondern sie kann auch dazu dienen, auf einem Grundträger oder Hilfsträger, die auf der Welle vormontiert sind, befestigt zu werden. Die Elastomerbandlänge 1 kann schließlich auf den Umfang des Trägers 7 angepasst werden. Darüber hinaus sind in dem Träger 7 mehrere Bohrungen 12 vorgesehen, mit denen eine schnelle und vereinfachte Montage erfolgen kann.

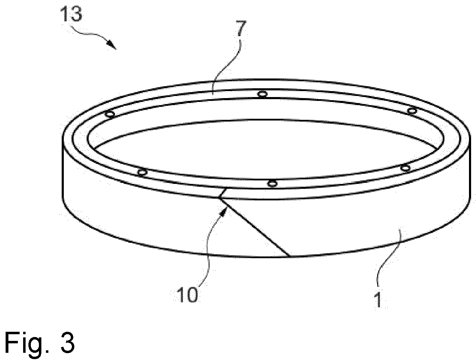

Figur 3 zeigt schließlich die fertiggestellte Maßverkörperung 13 in Form eines Polrades. Die Maßverkörperung 13 umfasst den Träger 7 und das auf den Träger 7 an dessen Mantelfläche aufgeklebte und beschriebene Elastomerband 1. Somit kann in vorteilhafter Weise das Elastomerband 1 spannungsfrei an den Träger 7 aufgebracht werden. Im Übrigen wird darauf verwiesen, dass die Darstellung gemäß Figur 3 schematisch zu sehen ist und offen lässt, ob es sich um einen offenen Magnetrotor oder einen geschlossenen Träger handelt.

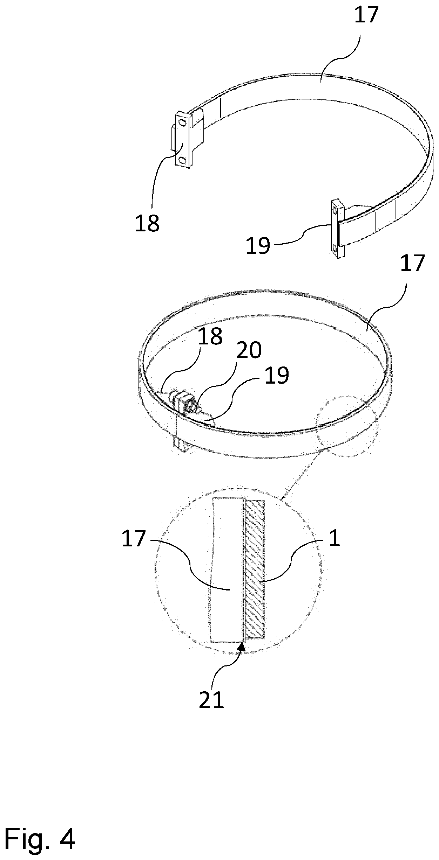

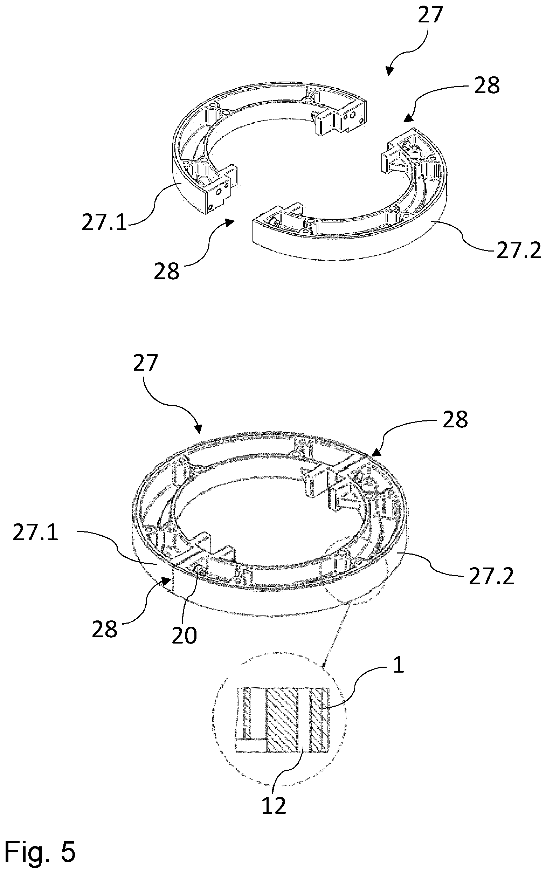

Figur 4 und Figur 5 zeigen jeweils, wie eine Maßverkörperung 13 in Form offener Magnetrotoren realisiert werden kann.

Figur 4 zeigt hierzu einen Träger 17 zur Umsetzung des sogenannten Bandschlaufenprinzips. Der Träger 17 besteht im vorliegenden Fall aus einem Stahlband geringer magnetischer Permeabilität, welches zum Beispiel Laser-geschnitten werden kann. Das Stahlband ist offen, und an seinen Enden sind jeweils Schlösser 18, 19 angebracht, welche miteinander verbunden werden können. Hierzu sind die Schlosser 18, 19 mit Bohrungen versehen, die beim Schließen des Bandes 17 fluchten und von einer Schraube durchsetzt werden können. Auf diese Weise kann das Stahlband 17 lösbar zu einer geschlossenen Schlaufe verbunden werden können.

In vorteilhafter Weise sind die Schlosser 18, 19 auf der Innenseite des Bandes angeordnet, sodass im Anschluss daran ein Elastomerband 1 auf die umfängliche Mantelfläche geklebt werden kann, ohne von den Schlössern unterbrochen oder in sonstiger Weise behindert zu werden. Ein über eine Schraubverbindung 20 hergestelltes geschlossenes Stahlband 17 als Träger ist ebenfalls in Figur 4 dargestellt. Des Weiteren ist ein Schnitt durch das Stahlband 17 und das darauf aufgeklebte (mit der Klebeschicht 21) Elastomerband 1 gezeigt. Das relativ dünne Stahlband 17 kann somit leicht auf einen Hilfsträger montiert werden. Es ist sehr dünn und platzsparend. Ferner können die Schlosser 18, 19 spaltfrei geschlossen werden. Das verklebte Elastomerband 1 wird an der Trennstelle der Schlösser 18, 19 durchgeschnitten. Dies ermöglicht ein Montieren oder Demontieren der Massverkörperung 13 mithilfe der Schlösser 18, 19.

Optional dazu kann auch ein Träger 27 aus zwei Halbschalen 27.1, 27.2 verwendet werden, der somit nach dem Halbschalenprinzip einen offenen Magnetrotor ausbilden kann. Im Unterschied zum Stahlband 17 aus Figur 4 ist der Träger 27 hier an zwei Stellen unterbrochen und bildet zwei getrennte Segmente aus. Während sich ein Ausführungsbeispiel nach Figur 4 zum Beispiel für ein Trägermaterial wie Stahl eignet, welches zumindest in einem gewissen Bereich biegsam oder auch elastisch ausgebildet ist, kann sich das Halbschalenprinzip gemäß Figur 5 für Anwendungsfälle anbieten, bei denen ein starres Trägermaterial gewünscht ist. Beispielsweise können die Halbschalen 27.1 und 27.2 als Kunststoff-Spritzgussteile gefertigt werden. Die Halbschalen 27.1 und 27.2 lassen sich zu einem Träger 27 zusammensetzen und können zum Beispiel (lösbar) verschraubt werden.

Wenn die Anforderungen an die Präzision dies verlangen, können Außen- und Zentrierdurchmesser im zusammengesetzten Zustand noch einmal überdreht werden. Ebenfalls ist in Figur 5 dargestellt, wie die Halbschalen 27.1 und 27.2 zu einem Gesamtträger 27 zusammengesetzt sind und über eine Schraubverbindung 20 miteinander verbunden werden. Die Elastomerbandschlaufe 1 wird an die Mantelfläche des Trägers 27 außen aufgeklebt, wie dies bereits in Figur 4 der Fall ist.

Das verklebte Elastomerband 1 wird an Trennstellen 28 der Halbschalen 27.1 und 27.2 durchgeschnitten. Dies ermöglicht ein Montieren oder Demontieren der Massverkörperung 13 mithilfe der Schrauben 20.

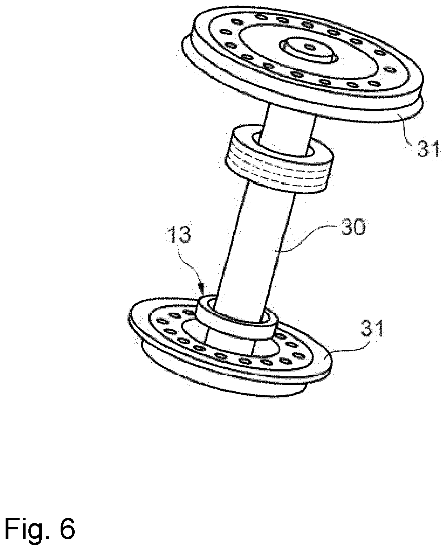

Schließlich wird in Figur 6 schematisch ein typischer Anwendungsfall bei einem Schienenfahrzeug gezeigt, welches eine Achse 30 umfasst, an deren Ende jeweils Räder 31 montiert sind. Zwischen den Rädern 31 befindet sich sodann die Maßverkörperung 13 in Form eines Polrades, die wie etwa die Ausführungsbeispiele nach den Figuren 4 und 5 zeigen, nicht mehr aufgeschoben werden muss, sondern als offener Magnetrotor montiert werden kann. Ist ein Hilfsträger auf der Achse vormontiert, kann z.B. eine dünne Maßverkörperung nach Figur 4 in Form eines mit einem aufgeklebten Elastomerband versehenen Stahlbandes auf dem Hilfsträger befestigt werden.

## Patentansprüche

1. Verfahren zur Herstellung einer Maßverkörperung (13), insbesondere eines Polrads oder einer linearen Maßverkörperung, umfassend folgende Verfahrensschritte in der folgenden Reihenfolge:
- Bereitstellen eines Elastomerbands (1) aus einem mit magnetisierbaren Partikeln versehenen Elastomer,
- Aufbringen des Elastomerbands (1) auf eine Unterlage (2), welche wenigstens teilweise aus einem Material mit hoher magnetischer Permeabilität, insbesondere einem ferromagnetischen Material, besteht,
- Erzeugung (M) einer auslesbaren Skala aus wenigstens zwei magnetisierten Markierungsbereichen (9) durch Magnetisierung des Elastomerbands (1) im Bereich der Markierungsbereiche (9),
- Bereitstellen (BT) eines Trägers (7, 17, 27), der aus einem Material mit geringer magnetischer Permeabilität ausgebildet ist,
- Aufbringen des Elastomerbands (1) mit der auslesbaren Skala auf den Träger (7, 17, 27).

2. Verfahren nach Anspruch 1, **dadurch gekennzeichnet**, wobei als Unterlage eine Halterungsvorrichtung verwendet wird und das Elastomerband (1) die Halterungsvorrichtung (2) umgibt, sodass es in Bereichen mit hoher magnetischer Permeabilität an der Halterungsvorrichtung (2) anliegt.

3. Verfahren nach einem der vorgenannten Ansprüche, **dadurch gekennzeichnet, dass** vor der Magnetisierung das Elastomerband (1) in Form einer Elastomerbandschlaufe, insbesondere in Form einer ringförmigen, nicht unterbrochenen Schlaufe bereitgestellt wird.

4. Verfahren nach einem der vorgenannten Ansprüche, **dadurch gekennzeichnet, dass** das Elastomerband (1) nach der Magnetisierung (M) und nach dem Aufbringen auf den Träger (7, 17, 27) quer zu seiner Längserstreckung durchgeschnitten wird.

5. Verfahren nach Anspruch 4, **dadurch gekennzeichnet, dass** das Elastomerband (1) nach der Magnetisierung (M) und nach dem Aufbringen auf den Träger (7, 17, 27) in der Weise quer zu seiner Längserstreckung durchgeschnitten wird, dass sich wenigstens ein Teil des Schnittes (10) mit einer Komponente entlang der Längsrichtung erstreckt, sodass der Schnitt (10) insbesondere durch wenigstens zwei Markierungsbereiche (9) verläuft.

6. Verfahren nach einem der vorgenannten Ansprüche, **dadurch gekennzeichnet, dass** das Elastomerband (1) auf den Träger (7, 17, 27) geklebt und/oder ultraschallverschweißt und/oder laserverschweißt wird.

7. Maßverkörperung (13), insbesondere Polrad als Maßverkörperung eines Drehgebers oder lineare Maßverkörperung, umfassend einen Träger (7, 17, 27) und einem Elastomerband (1) aus einem mit magnetisierbaren Partikeln versehenen Elastomer, welches auf dem Träger, insbesondere um den Träger (7, 17, 27) herum angebracht ist, wobei das Elastomerband (1) wenigstens zwei Markierungsbereiche (9) aufweist, in denen die magnetisierbaren Partikel magnetisiert sind, sodass die Markierungsbereiche (9) eine auslesbare Skala bilden, wobei der Träger (7, 17, 27) ein Material mit geringer magnetischer Permeabilität insbesondere ein paramagnetisches Material aufweist, wobei die Markierungsbereiche jeweils im Abstand von 1 mm von der Oberfläche des Elastomerbands (1) eine magnetische Flussdichte von mindestens 30 mT bei einer Dicke des Elastomerbandes von 1 mm bis 5 mm aufweisen und die magnetischen Partikel als Hartferritpartikel, insbesondere Strontiumferrit ausgebildet sind.

8. Maßverkörperung (13) nach Anspruch 7, **dadurch gekennzeichnet, dass** das Elastomerband (1) auf dem Träger (7, 17, 27) eine mit einem Schnitt unterbrochene ringförmige Schlaufe ausbildet, wobei der Schnitt (10) das Elastomerband (1) quer zur Längserstreckung durchtrennt, insbesondere in einem von 90° abweichenden Winkel zur Längserstreckung, besonders bevorzugt 45°.

9. Maßverkörperung (13) nach Ansprüchen 7 oder 8, **dadurch gekennzeichnet, dass** der Träger (27) zumindest zwei Segmente (27.1, 27.2) aufweist, die lösbar miteinander verbindbar sind und im zusammengesetzten und/oder miteinander verbundenen Zustand den Träger ausbilden, wobei die Segmente (27.1, 27.2) insbesondere durch Verschraubung (20) miteinander befestigbar sind, um auf einer Welle (30) ohne Aufschieben auf die Welle angebracht werden zu können, wobei der Träger (27) insbesondere eine Wellenaufnahme (11) zur Befestigung des Trägers (27) auf einer Welle aufweist.

10. Maßverkörperung (13) nach Anspruch 8, **dadurch gekennzeichnet, dass** der Schnitt (10) wenigstens zwei der Markierungsbereiche (9) erfasst.

## Claims

1. A method for producing a material measure (13), in particular a magnet wheel or a linear material measure, comprising the following method steps in the following sequence:
- preparing an elastomeric belt (1) made of an elastomer provided with magnetizable particles,
- applying the elastomeric belt (1) to a support (2) that consists at least partially of a material with a high magnetic permeability, in particular a ferromagnetic material,
- producing (M) a readable scale consisting of two magnetized marking areas (9) by magnetizing the elastomeric belt (1) in the region of the marking areas (9),
- providing (BT) a carrier (7, 17, 27) that is made of a material with lower magnetic permeability,
- applying the elastomeric belt (1) with the readable scale to the carrier (7, 17, 27).

2. The method according to claim 1, **characterized in that** a holding device is used as a support and the elastomeric belt (1) surrounds the holding device (2) so that it abuts the holding device (2) in regions with higher magnetic permeability.

3. The method according to any of the preceding claims, **characterized in that**, prior to the magnetization, the elastomeric belt (1) is provided in the form of an elastomeric belt loop, in particular in the form of an annular, uninterrupted loop.

4. The method according to any of the preceding claims, **characterized in that** the elastomeric belt (1), after the magnetization (M) and after application to the carrier (7, 17, 27), is cut transversely to its longitudinal extension.

5. The method according to claim 4, **characterized in that** the elastomeric belt (1), after the magnetization (M) and after application to the carrier (7, 17, 27) is cut transversely to its longitudinal extension such that at least part of the section (10) extends along the longitudinal direction with a component so that the section (10) runs in particular through at least two marking areas (9).

6. The method according to any of the preceding claims, **characterized in that** the elastomeric belt (1) is adhered and/or ultrasonically welded and/or laser welded to the carrier (7, 17, 27).

7. A material measure (13), in particular a magnetic wheel as a material measure of a rotary encoder or linear material measure, comprising a carrier (7, 17, 27) and an elastomeric belt (1) made of an elastomer that is provided with magnetizable particles and is applied to the carrier, in particular around the carrier (7, 17, 27), wherein the elastomeric belt (1) has at least two marking areas (9) in which the magnetizable particles are magnetized so that the marking areas (9) form a readable scale, wherein the carrier (7, 17, 27) has a material with lower magnetic permeability, in particular a paramagnetic material, wherein the marking areas have, at a distance of 1 mm from the surface of the elastomeric belt in each case, a magnetic flux density of at least 30 mT with a thickness of the elastomeric belt of from 1 mm to 5 mm, and the magnetic particles are formed as hard ferrite particles, in particular strontium ferrite.

8. The material measure (13) according to claim 7, **characterized in that** the elastomeric belt (1) forms, on the carrier (7, 17, 27), an annular loop interrupted by a section, wherein the section (10) cuts through the elastomeric belt (1) transversely to the longitudinal extension, in particular at an angle that deviates 90° from the longitudinal extension, particularly preferably 45°.

9. The material measure (13) according to claim 7 or 8, **characterized in that** the carrier (27) has at least two segments (27.1, 27.2) that are releasably connected to one another and form the carrier in the assembled and/or connected state, wherein the segments (27.1, 27.2) can be fastened together in particular by screws (20) so that, on a shaft (30), it is possible to mount on a shaft without being pushed onto the shaft, wherein the carrier (27) has in particular a shaft receptacle (11) for fastening the carrier (27) on a shaft.

10. The material measure (13) according to claim 8, **characterized in that** the section (10) measures at least two of the marking areas (9).

## Revendications

1. Procédé de fabrication d'un étalon de mesure (13), en particulier d'une roue polaire ou d'un étalon de mesure linéaire, comprenant les étapes suivantes dans l'ordre suivant, consistant à :
- fournir une bande d'élastomère (1) en élastomère pourvu de particules magnétisables,
- appliquer la bande d'élastomère (1) sur un support (2) qui est constitué au moins en partie d'un matériau à haute perméabilité magnétique, en particulier d'un matériau ferromagnétique,
- générer (M) une échelle lisible à partir d'au moins deux zones de marquage magnétisées (9) par magnétisation de la bande d'élastomère (1) dans la zone des zones de marquage (9),
- fournir (BT) un support (7, 17, 27) constitué d'un matériau à faible perméabilité magnétique,
- appliquer la bande d'élastomère (1) avec l'échelle lisible sur le support (7, 17, 27).

2. Procédé selon la revendication 1, **caractérisé en ce qu'**un dispositif de support est utilisé comme support et **en ce que** la bande d'élastomère (1) entoure le dispositif de support (2) de sorte qu'elle s'applique sur le dispositif de support (2) dans des zones à haute perméabilité magnétique.

3. Procédé selon l'une des revendications précédentes, **caractérisé en ce qu'**avant la magnétisation, la bande d'élastomère (1) est fournie sous la forme d'une boucle de bande d'élastomère, en particulier sous la forme d'une boucle annulaire non interrompue.

4. Procédé selon l'une des revendications précédentes, **caractérisé en ce que** la bande d'élastomère (1) est découpée transversalement à son extension longitudinale après magnétisation (M) et après application sur le support (7, 17, 27).

5. Procédé selon la revendication 4, **caractérisé en ce que** la bande d'élastomère (1), après magnétisation (M) et après application sur le support (7, 17, 27), est découpée transversalement à son extension longitudinale de telle sorte qu'au moins une partie de la découpe (10) s'étend avec une composante le long de la direction longitudinale, de sorte que la découpe (10) passe notamment par au moins deux zones de marquage (9).

6. Procédé selon l'une des revendications précédentes, **caractérisé en ce que** la bande d'élastomère (1) est collée et/ou soudée par ultrasons et/ou soudée au laser sur le support (7, 17, 27).

7. Étalon de mesure (13), en particulier roue polaire en tant qu'étalon de mesure d'un codeur ou étalon de mesure linéaire, comprenant un support (7, 17, 27) et une bande d'élastomère (1) constituée d'un élastomère pourvu de particules magnétisables, qui est appliquée sur le support, en particulier autour du support (7, 17, 27), la bande d'élastomère (1) présentant au moins deux zones de marquage (9) dans lesquelles les particules magnétisables sont magnétisées, de sorte que les zones de marquage (9) forment une échelle lisible, le support (7, 17, 27) présentant un matériau à faible perméabilité magnétique, en particulier un matériau paramagnétique, les zones de marquage présentant chacune, à une distance de 1 mm de la surface de la bande d'élastomère (1), une densité de flux magnétique d'au moins 30 mT pour une épaisseur de la bande d'élastomère de 1 mm à 5 mm et les particules magnétiques se présentant sous la forme de particules de ferrite dure, en particulier de ferrite de strontium.

8. Étalon de mesure (13) selon la revendication 7, **caractérisé en ce que** la bande d'élastomère (1) forme sur le support (7, 17, 27) une boucle annulaire interrompue par une découpe, la découpe (10) découpant la bande d'élastomère (1) transversalement à l'extension longitudinale, en particulier selon un angle différent de 90° par rapport à l'extension longitudinale, de préférence à 45°.

9. Étalon de mesure (13) selon les revendications 7 ou 8, **caractérisé en ce que** le support (27) présente au moins deux segments (27.1, 27.2) qui peuvent être liés l'un à l'autre de manière amovible et qui forment le support à l'état assemblé et/ou liés l'un à l'autre, les segments (27.1, 27.2) pouvant être fixés l'un à l'autre, notamment par vissage (20), pour pouvoir être montés sur un arbre (30) sans être enfilés sur l'arbre, le support (27) présentant notamment un logement d'arbre (11) pour la fixation du support (27) sur un arbre.

10. Étalon de mesure (13) selon la revendication 8, **caractérisé en ce que** la découpe (10) englobe au moins deux des zones de marquage (9).
